(19) Europäisches Patentamt

European Patent Office

Office européen des brevets

(11) **EP 4 438 342 B1**

(12) **EUROPEAN PATENT SPECIFICATION**

(45) Date of publication and mention
of the grant of the patent:
**27.05.2026 Bulletin 2026/22**

(21) Application number: **23166101.8**

(22) Date of filing: **31.03.2023**

(51) International Patent Classification (IPC):
***B60C 11/03*** *(2006.01)* ***B60C 11/11*** *(2006.01)*
***B60C 11/13*** *(2006.01)*

(52) Cooperative Patent Classification (CPC):
**B60C 11/0302; B60C 11/11; B60C 11/1392;**
B60C 2011/0313; B60C 2011/0337;
B60C 2011/0344; B60C 2011/0346;
B60C 2011/0358; B60C 2011/0374

(54) **TIRE WITH AN IMPROVED TREAD PATTERN**

REIFEN MIT VERBESSERTEM LAUFFLÄCHENPROFIL

PNEUMATIQUE AVEC UNE SCULPTURE DE BANDE DE ROULEMENT AMÉLIORÉE

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**

(43) Date of publication of application:
**02.10.2024 Bulletin 2024/40**

(73) Proprietor: **Bridgestone Europe NV/SA
1930 Zaventem (BE)**

(72) Inventor: **PISCOPO, Guido
00128 Rome (IT)**

(74) Representative: **Bardehle Pagenberg
Partnerschaft mbB
Patentanwälte Rechtsanwälte
Prinzregentenplatz 7
81675 München (DE)**

(56) References cited:
**FR-A1- 3 043 592      FR-A1- 3 108 562
JP-A- 2020 179 828      US-A1- 2020 001 654
US-A1- 2020 189 323**

**Description**

**Field of the disclosure**

The present invention relates to a vehicle tire. One possible application of the disclosed tire relates to an all-season tire intended to equip a passenger vehicle or commercial van vehicles. The disclosure can also be applied to other tires, for example winter tires or tires for off the road applications.

**Background**

All-season tires - which are used here as a typical example to facilitate readability - are known for providing good grip on snow covered road surfaces while also providing good performance on dry and wet road surfaces. Such tires are intended for use throughout the year, such that changing between summer and winter tires is no longer necessary.
For example, all-season tires are known that comprise grooves that extend from a center of the tire's tread, i.e., from the equatorial plane of the tire, towards a shoulder (sometimes also referred to as "shoulder portion" or "side portion") of the tire. These grooves, which typically extend in substantial axial direction, are configured to deliver water from a contact patch of the tire with the road outwards to provide contact between tire blocks and the road surface. Contact between blocks and the road is necessary to provide friction which provides for lateral road holding and further allows a driver to control the movement of the vehicle by accelerating, breaking and/or steering.
Further, all-season tires are known to have sipes, which are small incisions in a block, extending in substantially axial direction. Such sipes are configured to trap snow therein and provide an additional edge to increase performance on snow-covered road surfaces. Because providing multiple sipes, which would further increase snow performance, lowers the stiffness of the blocks and thus impairs dry and wet performance, usually only few sipes per block, preferably only one sipe per block, are provided in all-season tires to achieve an acceptable trade-off between snow and wet/dry performance.
French patent application FR 3 043 592 relates to a tire having a tread comprising at least one block, the block having at least one inclined sidewall.
Japanese patent application JP 2020 179828 A a pneumatic tire comprising a pair of adjacent first inclined main grooves that open at the tire ground contact end and a plurality of second inclined main grooves that extend while inclining to the other in the tire circumferential direction and open to the other tire ground contact end.
US patent application US 2020/001654 A1 relates to tire including circumferential main grooves extending in the tire circumferential direction and a land portion defined by the circumferential main grooves. The land portion includes a through lug groove that passes through the land portion in the tire lateral direction and includes first and second chamfered portions formed on left and right edge portions of the through lug groove.
US patent application US 2020/189323 A discloses a pneumatic tire including plurality of main grooves provided in a tread portion while extending in a tire circumferential direction. The tread inter alia includes a shoulder block defined by the shoulder main groove and the shoulder lateral grooves. The shoulder block comprises a top face provided with a plurality of lateral edges extending in the tire width direction, the plurality of lateral edges including an acute angle side lateral edge with an acute angle with respect to the tire circumferential direction, the acute angle side lateral edge being formed with a chamfered portion throughout a predetermined range in the tire width direction.
French patent application FR 3 108 562 A1 relates to a tire with a tread comprising two tread patterns, distributed periodically in the circumferential direction. Each tread pattern is formed by three portions.
To improve breaking performance, chamfers can be applied on the trailing edge of tire blocks, which allows the utilization of tire deformation during breaking to increase the effective block surface on the ground. However, chamfers may also reduce the traction of the tire on wet and dry grounds.
Furthermore, as blocks may be inclined with respect to the circumferential direction of the tire, the circumferential stresses applied to a block generally vary over the axial extension of a block, which may lead to an uneven distribution of wear energy over the axial width of the tread.
Thus, it is desirable to provide a tire having the improved breaking performance while providing a more even distribution of wear energy.

**Summary of the invention**

This object is achieved by providing an improved vehicle tire according to the independent claim. Further embodiments are described in the dependent claims.
According to aspects of the invention, a tire for a vehicle comprising a tread is provided. The tread comprises a set of consecutive blocks arranged along a circumference of the tire; and a plurality of first grooves arranged over the circumference of the tire, wherein each of the plurality of first grooves is arranged between two blocks of the set of consecutive blocks. Each of the set of consecutive blocks comprises a leading edge and a trailing edge. Each leading and trailing edge comprises a first portion arranged at a shoulder region of the tire, a second portion arranged at a position axial inward to the first portion, and a third portion arranged at a position axial inward to the second portion. Each of the set of consecutive blocks further comprises a first chamfer arranged at the trailing edge. The first chamfer has a first average width in the first portion, a second average width in the second portion and a third average width in the third portion. The first average width projected onto a circumferential direction of the tire corresponds to a first projected average width, the second average width projected onto the circumferential direction of the tire corresponds to a second projected average width, and the third average width projected onto the circumferential direction of the tire corresponds to a third projected average width. At least two of the first projected average width, the second projected average width and the third projected average width are substantially equal.

Such a tire allows for improved breaking performance, especially on wet and dry grounds, due to the chamfers. Because the projected average chamfer widths are substantially equal for at least two of the three portions of the respective edge, block deformation is reduced. In this way, the average chamfer width directly corresponds to the angle of inclination of the respective edge with the circumferential direction. I.e., portions which are more inclined with respect to the circumferential direction have a smaller (non-projected) average chamfer width - sometimes also referred to as "smaller chafers" below - than portions which are less inclined with respect to the circumferential direction. Correspondingly, the portions that are less inclined with respect to the circumferential direction, are provided with chamfers having a larger (non-projected) average width - sometimes also referred to as "wider chamfers" below.

As portions which are more inclined with respect to the circumferential direction generally experience higher stresses in the circumferential direction during normal rolling of the tire, they experience the most excessive strain during normal rolling of the tire. Thus, smaller chamfer should be applied here, to locally increase the stiffness of the block and to make the more inclined block portion more resistant to the higher stresses. The portions which are less inclined with respect to the circumferential direction generally experience lower stress in circumferential direction and thus can be provided with wider chamfers, which benefits breaking as well as steering performance.

In other words, providing chamfers such that the projected average chamfer widths are substantially equal for at least two of the three portions leads to a more uniform response to circumferentially applied stresses and thus further leads to a more uniform distribution of wear energy over the width of the tread.

## Brief description of the Figures

Fig. 1 shows a sketch of a vehicle tire according to the present disclosure.

Fig. 2 illustrates a half tread profile of a tire according to the present disclosure.

Fig. 3 illustrates an individual block of the set of consecutive blocks of Fig. 2.

Figs. 4A to 4C illustrate three cross-sections in different parts of the block of Fig. 3.

Fig. 5 illustrates a close-up view of an exemplary chamfer according to the present disclosure.

Fig. 6 illustrates a footprint of a tire according to the present disclosure.

Fig. 7 illustrates an exemplary embodiment of a V-shaped directional tread pattern according to the present disclosure.

Fig. 8 illustrates an exemplary embodiment of an S-shaped tread pattern according to the present disclosure.

## Detailed Description

To overcome the disadvantages of the prior art as discussed above, it may be desirable to provide a chamfer which has a projected average width in three portions, wherein the projected average widths are substantially constant in at least two of the three portions.

Within the context of the present disclosure, "chamfer" means an inclined side wall of a block which extends from the outer block surface radially inward. The wall is inclined such that the width of the block measured in circumferential direction increases towards the bottom of the groove. Each chamfer is defined by a height and a width. The chamfer height may correspond to the distance between the outer block surface and the radially innermost end of the inclined wall, measured in radial direction. The height of a chamfer (= distance between the outer block surface and the radially innermost end of the inclined wall) is usually lower than the total height of the block, and may for example be at most 50% or less than the total height of the block. The width of the chamfer may be measured perpendicular to the block and corresponds to the width of the inclined chamfer wall when projected onto the outer tread surface. For the sake of clarification, this width is also referred to as a "(non-projected) chamfer width" in the present disclosure.

Blocks of a tire tread generally have portions of varying inclination over the axial extension of the tread. Due to the varying inclination, the circumferential stresses applied to the portions of blocks vary, such that portions of blocks with higher inclination with respect to the circumferential direction experience higher stress than portions of blocks with lower inclination with respect to the circumferential direction.

Thus, it may be desirable to provide a chamfer on at least one edge of the block which has a substantially equal projected average chamfer width in at least two of the three portions of the edge. This allows for improved breaking performance by means of the larger chamfers in the more inclined portions of the edge, while also providing more uniform and optimized wear condition, as the wear energy is reduced especially in the more inclined block portions (with respect to the circumferential direction) which experience the most circumferential stress.

In other words, the present disclosure provides an improved synergy between breaking performance on the one hand and reduction as well as optimization of wear energy on the other hand.

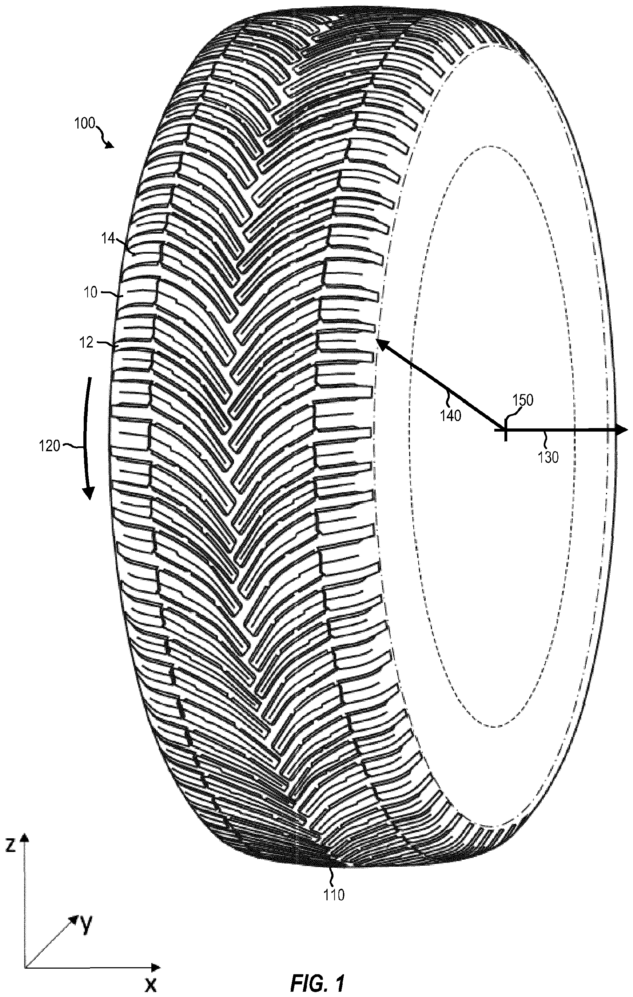

Fig. 1 shows a sketch of a vehicle tire according to the present disclosure.

According to Fig. 1, the tire 100 comprises a tread 110. The tread comprises a set of consecutive blocks 10 as well as grooves 12 arranged between two blocks 10 of the set of consecutive blocks. Moreover, a sipe 14 may be arranged within each of the set of consecutive blocks 10.

The blocks may be arranged consecutively a circumferential direction 120 of the tire.

A "groove" represents an incision in the tread pattern. A width of the groove may vary, for example, the first groove may be of larger width than the second groove, or may be of equal or even smaller width. For example, the width of a groove may be at least 2 mm. The width of a single groove does not necessarily have to be constant: For example, a groove can have a wider width towards the opening of the tread pattern, and a smaller width in radial inward direction. Also, a depth of a groove may vary, and sometimes a groove may extend at full tread depth (with the full tread depth being the maximum distance between the radially outermost part of the tire to the bottom of the deepest groove, measured in radial direction), but this does not necessarily have to be the case. For example a depth of least 1 mm, preferably at least 3 mm, is considered.

A "sipe" also represents an incision in the tread pattern. Reference herein to a "sipe" means an incision within a block, rather than a "groove" that separates a block. For example, the width of sipe may also be smaller than the width of a groove, and be for example of less than 2 mm. Just as is the case for the groove, the width of a sipe does not have to be constant, and means can be applied to allow for a wider width towards the opening of the tread pattern, and a smaller width in radial inward direction. Also, a depth of a sipe may vary, and sometimes a sipe may extend at full depth, but this does not necessarily have to be the case. For example, a depth of least 1 mm, preferably at least 20% of the depth of the first grooves, is considered.

Within the context of the present disclosure, "circumferential direction" 120 means a direction perpendicular to an axial direction 130 which is parallel to the direction in which the tire usually rolls, i.e., parallel to a tangential direction with respect to the circumference of the tire. With respect to Fig. 1, the circumferential direction 120 is thus a direction which is within a plane parallel to the yz-plane.

Within the context of the present disclosure, "axial direction" 130 means a direction parallel to the direction of an axis of a vehicle on which the tire is usually mounted. Thus, according to Fig. 1, the axial direction 130 is parallel to the x-axis and thus perpendicular to the yz-plane.

Within the context of the present disclosure, "radial direction" 140 means a direction perpendicular to the axial direction. The radial direction is parallel to a connection of a center 150 of the tire with the tread surface. Thus, the radial direction is within a plane parallel to the yz-plane and generally perpendicular to the axial direction 130 and the circumferential direction 120.

Within the context of the present disclosure, the "equatorial plane" refers to a plane which is perpendicular to the axial direction 130 and cuts the section width of the tire in two halves of equal width. Thus, the equatorial plane is parallel to the yz-plane and corresponds to the widthwise centerline of the tread.

Also, any numeral angles given herein are to be considered absolute values, i.e., not limiting to the orientation of the respective angle.

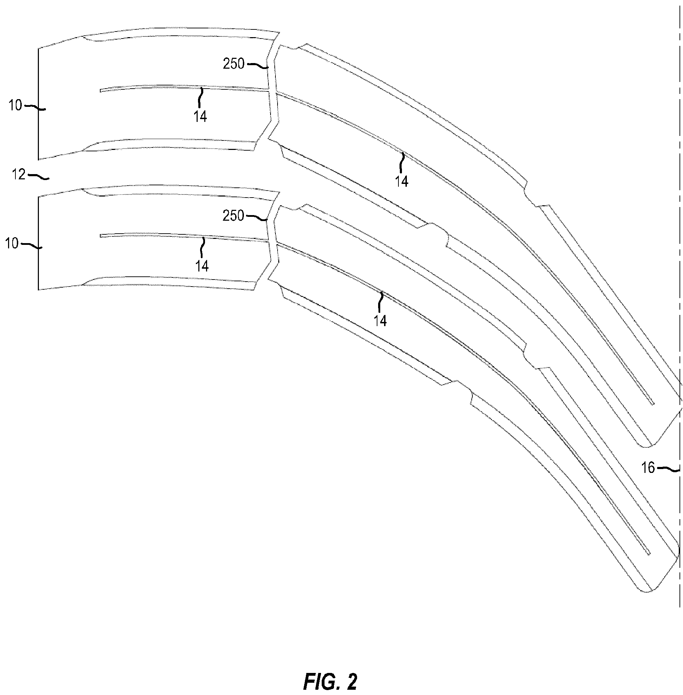

Fig. 2 illustrates a half tread profile of a tire according to the present disclosure.

According to Fig. 2, the tread comprises a set of consecutive blocks 10 arranged along a circumference of the tire. "Consecutive blocks" within the context of this disclosure means that the tread comprises multiple blocks following one another in succession over the circumference of the tire. While it is preferred that the invention according to the present disclosure is provided for all blocks of the tire, it is possible that some blocks, which may be arranged between individual blocks 10 of the set of consecutive blocks, do not comprise chamfers in accordance with the present invention.

Generally, the blocks 10 have the purpose of providing contact to the ground when the tire is in rolling condition. The edges as well as the surfaces of the blocks are configured to provide a friction force between the tire and the ground for grip, allowing general roadholding as well as movement control of the vehicle by a driver of a vehicle by acceleration, breaking or steering.

According to Fig. 2, the tread further comprises a plurality of first grooves 12 arranged over the circumference of the tire, wherein each of the plurality of first grooves 12 is arranged between two blocks 10 of the set of consecutive blocks. Preferably, the grooves 12 start near the equatorial plane 16 of the tire and extend towards a shoulder end of the tread to open at the outer edge of the tire. The grooves 12 are generally delimited by the adjacent blocks 10.

The purpose of the grooves 12 is mainly the drainage of water from the contact patch by guiding the water along the groove 12 towards the shoulder of the tire and eject the water from there, as the tire rolls on the ground. Thus, the grooves 12 provide for improved performance of the tire, especially in wet road conditions. Further, as the grooves delimit the consecutive blocks, they also provide edges for the blocks for improved snow performance. Moreover, the grooves allow for improved wear performance, as they allow more flexibility of the tread elements, such that slippage of the blocks over the ground is reduced, leading to a decrease in the abrasion effects leading to wear.

The tire of Fig. 2 may further comprise a second groove 250 extending through each of the set of consecutive blocks 10, connecting two consecutive first grooves 12. Providing such a second groove allows for a decoupling of the parts of block 10 near a shoulder of a tire and the more central parts. This allows for better breaking performance, while also enhancing steering and lateral roadholding, as the parts of the block 10 mainly involved breaking, i.e., the parts near a shoulder, are mechanically decoupled from the more central parts which mainly contribute to steering and lateral roadholding.

As further illustrated in Fig. 2, the tread may further comprise a plurality of sipes 14. In the shown tread pattern, each of the plurality of sipes 14 may preferably extend substantially along a shape of each of the set of consecutive blocks 10. However, other arrangements and shapes of the sipes on the outer tread surface are also possible, for example wavy shapes, zigzag-shapes, and the like. The sipes do not necessarily have to follow the shape of the block. For example, the sipes may only be included along a part of the shape of the block, or have a different angle of inclination than the underlying block or portion of the block with respect to the circumferential direction. Also, while some sipes may have walls extending radially towards a center of the tire, some sipes may also have wavy shapes, zigzag shapes or the like in radial direction. Moreover, such sipes may also be inclined with respect to the radial direction. Some sipes may comprise protrusions near a bottom of the sipe.

Sipes 14 are capable of trapping snow therein and providing an additional edge of the tread. This improves traction on snow-covered grounds.

In some embodiments, the plurality of sipes 14 may define an edge ingredient (EI) corresponding to the ratio between a sum of projected lengths of the plurality of sipes in an axial direction (SAP) and the circumference of the tread (C), such that

$$EI = \frac{\sum SAP}{C}, \tag{1}$$

wherein the EI is at least 2 and at most 20. Preferably, the EI may be at least 2 and at most 16, more preferably at least 2 and at most 15.

The circumference C of the tire is measured at the radially outermost ring of the tire in inflated condition. For the inflation pressure and ambient temperature, the same specifications as described below for tire footprint measurements apply.

A high edge ingredient provides for better capacity for trapping snow, which improves the traction of the tire on snow-covered ground. However, a high edge ingredient also leads to a low stiffness of the blocks, which generally worsens breaking/acceleration performance on dry ground. An edge ingredient in one of the above ranges provides a particularly good tradeoff between traction on snow-covered grounds and braking/acceleration performance on dry ground.

In some embodiments, the tire according to Fig. 2 may further have a void volume, being the volume of all grooves, sipes and recesses provided in the tread, and a volume of rubber provided in the tread, together making up the total volume of the tread. I.e., if the total volume of the tire is $V_T$, the void volume being $V_V$ and the rubber volume being $V_R$, then the total volume $V_T$ would be $V_T=V_V+V_R$. In a preferred embodiment, the ratio $V_V/V_R$ between the void volume $V_V$ and the rubber volume $V_R$ may be at least 0.20 and at most 0.40. Preferably, the ratio $V_V/V_R$ may be at least 0.24 and at most 0.37, more preferably at least 0.28 and at most 0.35.

The ratio $V_V/_{VR}$ is directly linked to the stiffness of the tread profile. Thus, a higher ratio $V_V/V_R$ indicates a higher amount of void in the tread, which leads to lower stiffness of the tread, and thus benefits snow performance. A lower ratio $V_V/V_R$ indicates a higher amount of rubber in the tread, which leads to higher stiffness and thus increases breaking performance. A void to rubber ratio in the specified range provides optimal tradeoff between snow and dry performance, providing a tire which exhibits good breaking performance on dry ground as well as good traction on snow-covered grounds.

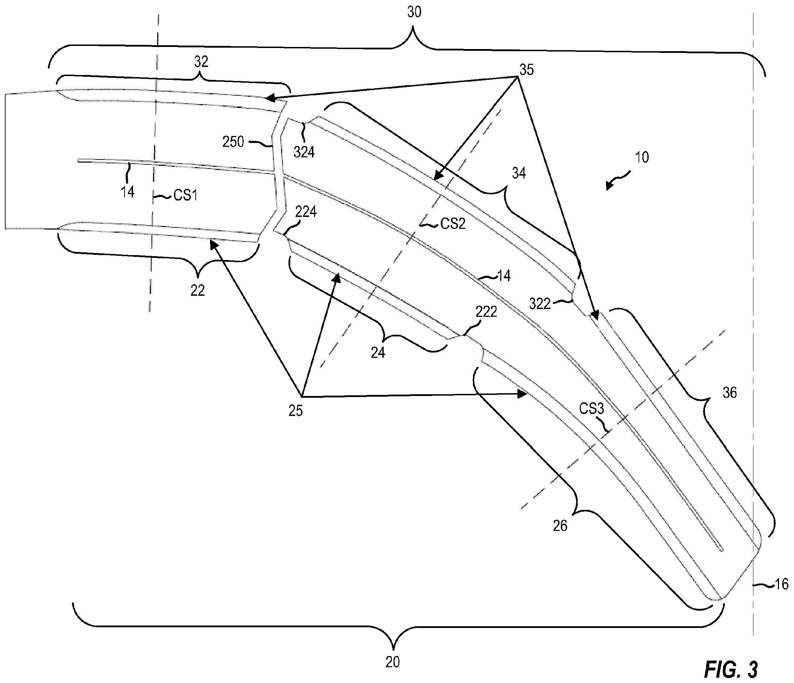

Fig. 3 illustrates an individual block of the set of consecutive blocks of Fig. 2.

According to Fig. 3, block 10 comprises a leading edge 20 and a trailing edge 30.

In the context of this disclosure, "leading edge", sometimes also denoted as "traction edge", refers to the edge of the block that, when a longitudinal traction force is applied to the tire reacts mostly to such force. Typically, the "leading edge" is the edge of a block which is of greater length than the lateral edges of the block, and which first encounters the ground as the block of a tire rolling in a preferred rolling direction enters the contact patch of the tire with the ground.

"Trailing edge", sometimes also denoted as "breaking edge", refers to the edge of the block that, when a longitudinal breaking force is applied to the tire reacts mostly to such force. Typically, the "trailing edge" is the edge of the block which is of greater length than the lateral edges of the block, and which is the last edge to lose contact with the ground as the block of the tire rolling in a preferred rolling direction leaves the contact patch of the tire with the ground.

The leading edge 20 comprises a first portion 22 arranged at a shoulder region of the tire, a second portion 24 arranged at a position axial inward to the first portion 22, and a third portion 26 arranged at a position axial inward to the second portion 24. The trailing edge 30 comprises a first portion 32 arranged at a shoulder region of the tire, a second portion 34 arranged at a position axial inward to the first portion 32, and a third portion 36 arranged at a position axial inward to the second portion 34.

The first portions 22, 32 of the leading edge 20 and the trailing edge 30 may be denoted as "shoulder portions", the second portions 24, 34 of the leading edge 20 and the trailing edge 30 may be denoted as "intermediate portions" and the third portions 26, 36 of the leading edge 20 and the trailing edge 30 may be denoted as "central portion". The central portions may be arranged adjacent to the equatorial plane 16 of the tire.

As is illustrated in Fig. 3, the axial extension of corresponding edge portions may differ between the edges, i.e., as illustrated in Fig. 3, the second portion 34 of the trailing edge 30 may have a greater axial extension than the corresponding second portion 24 of the leading edge 20. Generally, the third portions 26, 36 of the leading edge 20 and the trailing edge 30 may have an axial extension of at least 25% and at most 40% of a half footprint width of the tire. Thus, the third portions 26, 36 preferably start adjacent to the equatorial plane 16 of the tire and extend axially outward up to a width of 25% to 40% of a half footprint width of the tire.

The second portions 24, 34 of the leading edge 20 and the trailing edge 30 may have an axial extension of at least 25% and at most 55% of a half footprint width of the tire. Thus, the second portions 24, 34 preferably start at an axial outward end of the third portions 26, 36 and extend axially outward up to a width of 65% to 80% of a half footprint width of the tire.

The first portions 22, 32 of the leading edge 20 and the trailing edge 30 may have an axial extension of at least 20% and at most 35% of a half footprint width of the tire. Thus, the first portions 22, 32 preferably start at an axial outward end of the second portions 24, 34 and extend axially outward up to an axial outward end of the tire, i.e., covering the total portion of the half footprint width axially outwards from the second portions 24, 34.

In some embodiments, a separation between two portions of the leading and trailing edge may be defined by either one of:

- a recess in the respective edge between neighboring portions;
- a variation in inclination angle of the respective edge to the circumferential direction of the tire;
- the direction or magnitude of curvature of the respective edge;
- a stepwise increase or decrease in chamfer width;
- a groove extending through the block in substantial circumferential direction; or
- a combination thereof.

For example, as is illustrated in Fig. 3, a recess 222 may separate the second portion 24 of the leading edge 20 from the third portion 26 of the leading edge 20. Further, recess 224 may separate the first portion 22 of the leading edge 20 from the second portion 24 of the leading edge 20. Similarly, recess 322 may separate the second portion 34 of the trailing edge 30 from the third portion 36 of the trailing edge, and recess 324 may separate the first portion 32 of the trailing edge 30 from the second portion 34 of the trailing edge 30.

Alternatively, other means of separation between the edge portions are possible. For example, as illustrated in Fig. 3, groove 250 extending through the block 10 in substantially circumferential direction may separate the first portions 22, 32 from the second portions 24, 34. While such a groove is only shown in Fig. 3 for separating the first portions 22, 32 from the second portions 24, 34, a similar groove may also be arranged between the second portions 24, 34 and the third portions 26, 36.

Furthermore, although in Fig. 3 only recesses 222, 224, 322, 324 as well as groove 250 are shown as means for separating neighboring edge portions, other means can be utilized, such as a stepwise increase or decrease in chamfer width.

Alternatively, a change in direction or magnitude of curvature of the respective edge can be used, i.e., a change between concave and convex curvature, as well as an increase or decrease in curvature of the edge, can separate two neighboring edge portions.

Moreover, an inclination angle of the respective block to the circumferential direction of the tire can be used to determine a separation between edge portions.

According to one approach, the inclination angle of a respective part of the edge is determined by the angle between (i) a tangent applied on the respective edge of the block and (ii) the circumferential direction of the tire. If the respective part of the edge comprises a chamfer, the tangent is applied on the circumferentially outermost end of the block (so as to disregard the width and shape of the chamfer). This approach may be used if the respective portions of the edge are formed continuously or nearly continuously, i.e., without any substantial circumferential incision in-between, and shows on the respective edge a discontinuity, e.g., a significant change, in its inclination with respect to the circumferential direction of the tire. The discontinuity then corresponds to the separation between the neighboring edge portions.

Preferably, an inclination angle (i.e., the inclination angle of the tangent on the respective portion of the edge with respect to the circumferential direction) of the first portions 22, 32 may be at least 65° and at most 90° to the circumferential direction, preferably 75° and at most 90° to the circumferential direction, and more preferably, at least 85° and at most 90° to the circumferential direction. An inclination angle of the second portions 24, 34 may be at least 50° and at most 65° to the circumferential direction. Preferably, the inclination angle of the second portions 24, 34 may be at least 50° and at most 60° to the circumferential direction. An inclination angle of the third portions 26, 36 may be at least 20° and at most 50° to the circumferential direction. Preferably, the inclination angle of the third portions 26, 36 may be at least 30° and at most 50° to the circumferential direction.

According to another approach, which may be used if the respective edge does not show any discontinuity in its inclination with respect to the circumferential direction of the tire, a separation between edge portions is preferably determined according to the axial extension on the footprint width as described above in connection with Fig. 3, a recess in the respective edge, the direction or magnitude of curvature of the respective edge, a stepwise increase or decrease in chamfer width, or a groove extending through the block in substantial circumferential direction.

More preferably, in this approach, the inclination angle can also be used in addition to one or more of the afore-mentioned criteria. For example, the third portions 26, 36 that start adjacent to the equatorial plane the tire and extend axially outward up to a width of 25% to 40% of a half footprint width of the tire shown, for at least one of the possible extensions in this range, an angle of inclination that may be at least 20° and at most 50° to the circumferential direction, preferably, at least 30° and at most 50° to the circumferential direction. Likewise, the second portions 24, 34 that start at an axial outward end of the third portions and extend axially outward up to a width of 65% to 80% of a half footprint width of the tire show an inclination angle of at least 50° and at most 65° to the circumferential direction, preferably, at least 50° and at most 60°. Likewise, the first portions 22, 32 that start at an axial outward end of the second portions and extend axially outward up to an axial outward end of the tire show an inclination angle of at least 65° and at most 90° to the circumferential direction, preferably 75° and at most 90° to the circumferential direction, and more preferably, at least 85° and at most 90° to the circumferential direction.

Also, combinations of possible means for separating edge portions are possible. As one example, Fig. 3 shows for the separation between the first portions 22, 32 and the second portions 24, 34 a combination of recesses 224, 324 and groove 250, and there are further conceivable combinations.

According to Fig. 3, block 10 further comprises a first chamfer 25. The first chamfer 25 is arranged at the leading edge 20. In some embodiments, the block may comprise both a first chamfer 25 arranged at the leading edge 20 and a second chamfer 35 at the trailing edge 30.

The first chamfer 25 has a first average width in the first portion, a second average width in the second portion and a third average width in the third portion.

The width of a chamfer refers to the width measured perpendicularly to the respective block edge, as explained above. The average width of a chamfer in a portion can be defined by measuring the width of the respective chamfer in multiple points within the portion of the respective edge and dividing by the number of points. Mathematically, the average width $\overline{w}$ of a chamfer in a portion may be calculated by integrating the chamfer width over the total length of the respective portion and dividing the integral by the length of the respective portion:

$$\overline{w} = \frac{1}{L} \cdot \int_{0}^{L} w(x)dx, \qquad (2)$$

with L being the total length of the respective edge portion, $dx$ being the length of an infinitesimal length element of the respective edge portion and w(x) being the chamfer width at the position x of the respective edge portion.

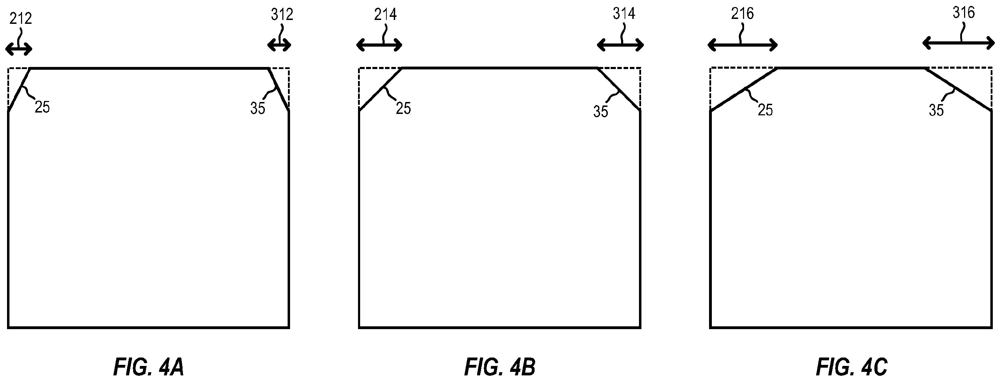

Fig. 3 further shows three cutting lines CS1, CS2 and CS3. Figs. 4A to 4C illustrate three cross-sections in different parts of the block of Fig. 3.

As is shown in Figs. 4A to 4C, the block 10 may comprise chamfers of different widths in different portions.

Fig. 4A illustrates a cross-sectional view of block 10, cut along line CS1. Thus, Fig. 4A illustrates the first chamfer 25 in the first portion 22 of the leading edge 20 of the block 10, as well as the second chamfer 35, arranged in the first portion 32 of the trailing edge 30 of the block 10. As discussed above, the chamfer widths are measured perpendicular to a block tangent. Fig. 4A illustrates the first average width 212 of the first chamfer 25 in the first portion 22 of the leading edge 20 and the fourth average width 312 of the second chamfer 35 in the first portion 32 of the trailing edge 30.

Fig. 4B illustrates a cross-sectional view of block 10, cut along line CS2. Thus, Fig. 4B illustrates the first chamfer 25 in the second portion 24 of the leading edge 20 of the block 10, as well as the second chamfer 35, arranged in the second portion 34 of the trailing edge 30 of the block 10. Fig. 4B illustrates the second average width 214 of the first chamfer 25 in the second portion 24 of the leading edge 20 and the fifth average width 314 of the second chamfer 35 in the second portion 34 of the trailing edge 30.

Fig. 4C illustrates a cross-sectional view of block 10, cut along line CS3. Thus, Fig. 4C illustrates the first chamfer 25 in the third portion 26 of the leading edge 20 of the block 10, as well as the second chamfer 35, arranged in the third portion 36 of the trailing edge 30 of the block 10. Fig. 4C illustrates the third average width 216 of the first chamfer 25 in the third portion 26 of the leading edge 20 and the sixth average width 316 of the second chamfer 35 in the third portion 36 of the trailing edge 30.

The widths of the first chamfer 25 and the second chamfer 35 may vary within a certain portion. For example, the first chamfer 25 may have a first width in a first position within the first portion 22 of the leading edge 20 and a second width in a second position within the first portion 22 of the leading edge 20, which is different from the first width. The same applies to the second chamfer 35.

Thus, an average width of the chamfer may be calculated for each portion, as specified above. For simplicity, the cross-sectional views illustrated in Figs. 4A to 4C illustrate three cross-sections in different parts of the block of Fig. 3 are considered to illustrate the cross section at a position, where the chamfer locally has the respective average width in the respective portion.

The projected chamfer width generally corresponds to

$$w_p = w \cdot sin(\varphi) \tag{3}$$

with $\varphi$ being the inclination angle of the respective edge with respect to the circumferential direction of the tire at the position x of the respective edge portion.

The first average width projected onto a circumferential direction of the tire corresponds to a first projected average width, the second average width projected onto the circumferential direction of the tire corresponds to a second projected average width, and the third average width projected onto the circumferential direction of the tire corresponds to a third projected average width.

If the chamfer width $w_i$ as well as the inclination angle $\varphi_i$ is constant over a portion i, then the projected average width $\overline{w}_{p,i}$ can be calculated as

$$\overline{w}_{p,i} = w_i \cdot sin(\varphi_i), \tag{4}$$

with $\varphi_i$ being the inclination angle of the respective edge with respect to the circumferential direction of the tire.

In case the respective edge may be curved ($\varphi$ depending on x), or the chamfer width changing over the extension of the respective edge portion (w depending on x), the projected average width may be calculated (in accordance with equation (2)) as

$$\overline{w}_p = \frac{1}{L} \cdot \int_0^L sin\big(\varphi(x)\big) \cdot w(x)dx, \tag{5}$$

with L being the total length of the respective edge portion, *dx* being the length of an infinitesimal length element of the respective edge portion, w(x) being the chamfer width at the position x of the respective edge portion and $\varphi(x)$ being the inclination angle of the respective edge with respect to the circumferential direction at the position x.

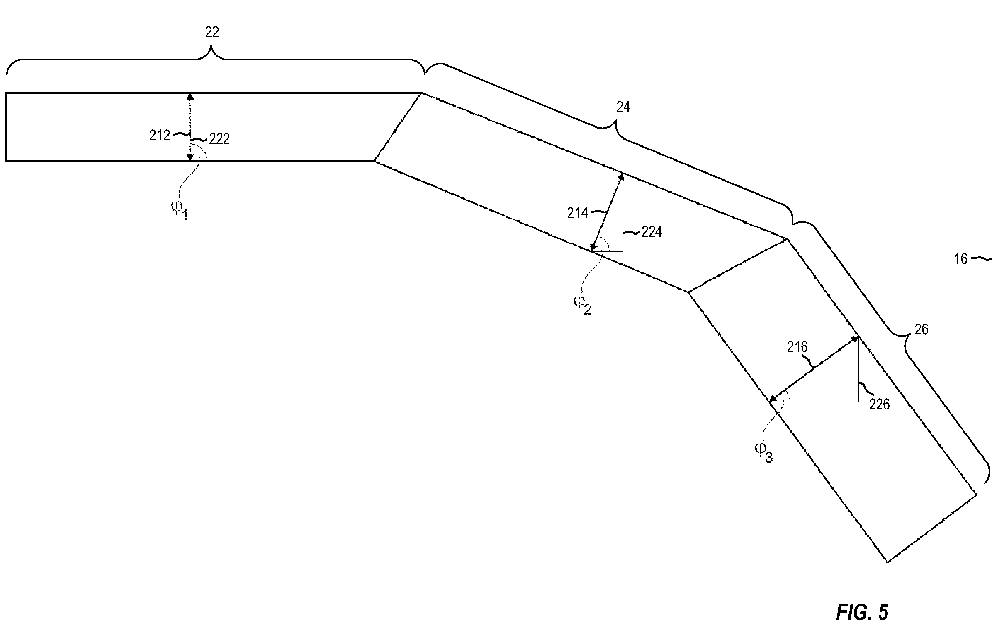

Fig. 5 illustrates a close-up view of an exemplary chamfer according to the present disclosure.

For simplicity, the block itself is not shown in Fig. 5. However, it will be understood that the chamfer is applied to an edge of the block. The reference signs used in Fig. 5 correspond to the reference signs used with respect to the first chamfer 25 on the leading edge 20. However, it is to be understood that the same quantities described with respect to Fig. 5 may also apply to the second chamfer 35 on the trailing edge 30.

Also, for simplicity, the chamfers shown in Fig. 5 are considered to have constant widths in each individual portions and the inclination angle is constant in each individual portion.

The chamfer 25 in the first portion 22 of the leading edge 20 may have a first average width 212 ($\overline{w}_1$). In the second portion 24 of the leading edge 20, the chamfer 25 may have a second average width 214. In the third portion 26 of the leading edge 20, the chamfer 25 may have a third width 216. Preferably, the angle of inclination with respect to the circumferential direction (i.e., with respect to the equatorial plane 16), may vary between the individual portions 22, 24 and 26. In some examples, the first portion 22 of the leading edge may be inclined close to $\varphi_1 = 90°$ with respect to the equatorial plane 16. Then, the first projected average width 222 ($\overline{w}_{p,1}$) may be calculated according to equation (4) as

$$\overline{w}_{p,1} = \overline{w}_1 \cdot \sin(\varphi_1) = \overline{w}_1. \qquad (6)$$

I.e., if the respective edge portion has an inclination angle of 90° with respect to the equatorial plane, the average width is equal to the projected average width.

Similarly, chamfer 25 may have a second average width 214 ($\overline{w}_2$) in the second portion 24 of the leading edge 20. In the second portion 24, the leading edge 20 may be inclined with respect to the equatorial plane 16 by an angle $\varphi_2$ which may be smaller than $\varphi_1$. Thus, the second projected average width 224 ($\overline{w}_{p,2}$), may also be calculated by equation (4) as

$$\overline{w}_{p,2} = \overline{w}_2 \cdot \sin(\varphi_2). \qquad (7)$$

Further, chamfer 25 may have a third average width 216 ($\overline{w}_3$) in the third portion 26 of the leading edge 20. In the third portion 26, the leading edge 20 may be inclined with respect to the equatorial plane 16 by an angle $\varphi_3$ which may be smaller than $\varphi_2$. Thus, the third projected average width 226 ($\overline{w}_{p,3}$), may also be calculated by equation (4) as

$$\overline{w}_{p,3} = \overline{w}_3 \cdot \sin(\varphi_3). \qquad (8)$$

According to Fig. 5, at least two of the first projected average width 222 ($\overline{w}_{p,1}$), the second projected average width 224 ($\overline{w}_{p,2}$) and the third projected average width 226 ($\overline{w}_{p,3}$) are substantially equal. Preferably, all three projected average widths 222, 224, 226 may be substantially equal. In the example illustrated in Fig. 5, this can be achieved by providing a chamfer with a larger average width for block parts which are less inclined with respect to the equatorial plane 16.

For example, the third average width 216 of the first chamfer 25 in the third portion 26 may be higher than the second average width 214 width of the first chamfer 25 in the second portion 24. Furthermore, the second average width 214 of the first chamfer 25 in the second portion 24 may be higher than the first average width 212 of the first chamfer 25 in the first portion 22.

As discussed above, this arrangement provides for an improved breaking and traction performance, as well as reduced and more evenly distributed wear energy over the width of the tread, since the average chamfer width directly corresponds to the angle of inclination of the respective edge with the circumferential direction. Thus, the stresses as experienced on different portions of the blocks of the tire are effectively compensated.

In the present invention, the first chamfer 25 is arranged at the leading edge 20 of the block 10. A chamfer on the leading edge has proven to work efficiently to contribute to traction, especially on snow-covered grounds. Generally, in order to increase traction on snow-covered grounds, the surface area of a block should be reduced, to allow for increased contact pressure between the block surface and the ground. Providing the chamfer on the leading edge has shown to be a good location for reducing the area of the block surface. The increased contact pressure provided due to the chamfer on the leading edge, especially leading to a peak in contact pressure at the leading edge of the block, allows for the block, and especially the leading edge thereof, to dig into the snow more efficiently, thus increasing the traction of the tire on snow-covered grounds. Thus, providing the arrangement on the leading edge especially improves traction.

In some embodiments, the block 10 may further comprise a second chamfer 35 arranged at the trailing edge 30 of the block 10. Chamfers on the trailing edge contribute to dry breaking performance. As a vehicle breaks, due to the inertia of the vehicle's mass, tread blocks are deformed and bend. This way, some of the rubber surface which is arranged towards the leading edge of the block loses contact with the road surface, thus reducing the contact surface of each block. A reduced contact surface leads to reduced friction force, which thus impairs the breaking performance of the tire. By providing a chamfer on the trailing edge, the inclined surface of the chamfer is pushed towards the ground during breaking as the block bends, thus increasing the rubber surface that is in contact with ground. This way, surface loss at the leading end of the block can be compensated and the contact surface is increased, which leads to better breaking performance by an increased friction force. Consequently, a chamfer on the trailing edge of the block contributes to dry and wet breaking performance.

The second chamfer 35 may have a fourth average width 312 in the first portion 32 of the trailing edge 30, a fifth average width 314 in the second portion 34 of the trailing edge 30 and a sixth average width 316 in the third portion 36 of the trailing edge 30. Similarly as above, the fourth average width 312 projected onto the circumferential direction of the tire may correspond to a fourth projected average width, the fifth average width 314 projected onto the circumferential direction of the tire may correspond to a fifth projected average width, and the sixth average width 316 projected onto the circumferential direction of the tire may correspond to a sixth projected average width. At least two of the fourth projected average width, the fifth projected average width and the sixth projected average width may be substantially equal.

The projected average widths of the second chamfer 35 can be determined in the same way as described with reference to Fig. 5 and the projected average widths 222, 224 and 226.

Preferably, the fourth projected average width, the fifth projected average width and the sixth projected average width may be substantially equal.

In this case, the fourth average width 316 of the second chamfer 35 in the third portion 36 may be higher than the second average width 314 width of the second chamfer 35 in the second portion 34. Furthermore, the second average width 314 of the second chamfer 35 in the second portion 34 may be higher than the first average width 312 of the second chamfer 35 in the first portion 32.

This arrangement provides for an even further improved breaking and traction performance, as well as further reduced and more evenly distributed wear energy over the width of the tread.

In some embodiments, at least one of the first projected average width 222, the second projected average width 224 and the third projected average width 226 may be at least 1 mm and at most 3.5 mm, preferably at least 1 mm and at most 2 mm. The projected average widths are linked to the chamfer widths. In the provided range, they ensure optimal balance between dry, wet wear and snow performance.

While the embodiments described above are directed to blocks having three portions, blocks with more portions, for example with four or more portions, are also possible. This can be realized for example by sub-partitioning, i.e., partitioning a portion into one or more continuously formed sub-portions.

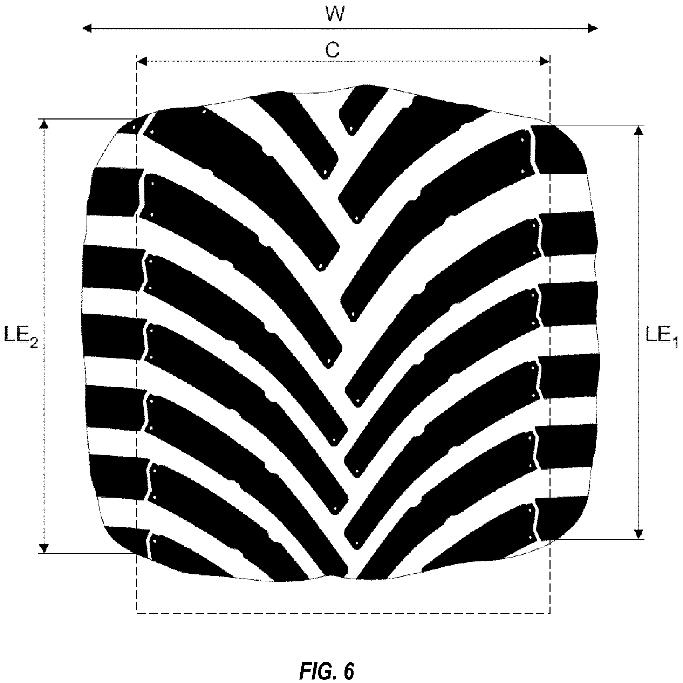

Fig. 6 illustrates a footprint of a tire according to the present disclosure.

The procedure for measuring a tire footprint according to the present disclosure is described elsewhere herein.

The footprint illustrated in Fig. 6 shows consecutive blocks 10, as well as grooves 12 between the set of consecutive blocks. The void between the consecutive blocks consists of the grooves 12 as well as the chamfers 25 and 35 which may be located on the leading edge 20 and/or the trailing edge 30.

According to Fig. 6, the footprint may comprise a footprint width W measured in axial direction at the widest axial extension of the footprint. The footprint according to Fig. 6 may further comprise a central area making C up 80% of the footprint width, the central area having two exterior edges arranged on axial opposite ends of the central area.

The footprint according to Fig. 6 may further comprise two exterior lengths $LE_1$ and $LE_2$, measured in circumferential direction at the exterior edges of the central area C. Thus, the footprint may have an average footprint length, corresponding to the average of the two exterior lengths:

$$L_{avg} = \frac{LE_1 + LE_2}{2} \qquad (9)$$

Thus, a tire footprint ratio $\frac{L_{avg}}{W}$ may be defined as the ratio between the average footprint length $L_{avg}$ and the footprint width W. In some embodiments, the tire footprint ratio may be at least 0.6 and at most 1.0. Preferably, the tire footprint ratio may be at least 0.7 and at most 0.9.

The tire footprint ratio can be seen as a measure for the "roundness" of the footprint - a lower tire footprint ratio hints towards a rounder footprint, while a higher tire footprint ratio hints towards a more rectangularly shaped footprint. Thus, the tire footprint ratio indicates the impact of traction/breaking forces on the blocks, especially in regions near the shoulder of the tire.

A more rectangular footprint may lead to higher stress applied to the shoulder and intermediate portions, especially during breaking. Thus, the tire footprint ratio can be linked to the preferred choice in chamfer width, as on a more rectangular shaped footprint, higher chamfer width might be more beneficial for breaking performance, while the opposite applies to rounder footprints.

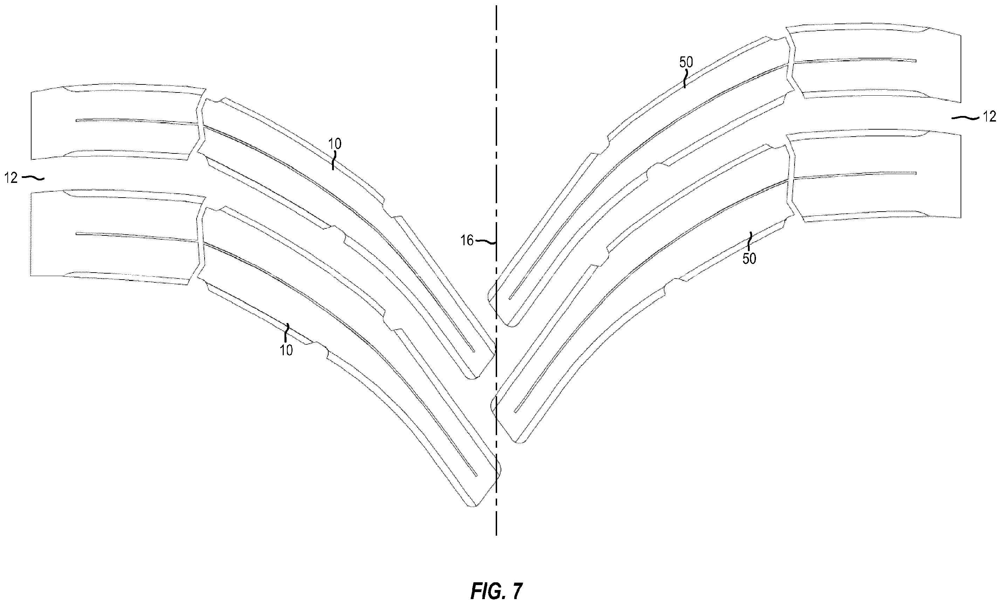

Fig. 7 illustrates an exemplary embodiment of a V-shaped directional tread pattern according to the present disclosure.

According to Fig. 7, some embodiments of the tread may comprise a second set of consecutive blocks 50, generally corresponding to the first set of consecutive blocks 10, which is arranged at an opposite side of the equatorial plane 16 of the tire. In some embodiments, as illustrated in Fig. 7, the second set of consecutive blocks 50 can be provided axisymmetric to the first set of blocks 10, leading to a V-shaped tread pattern which has a preferred rolling direction. The V shape provides the advantage of improved water drainage properties, because, when the tire rolls in the preferred rolling direction, water can be ejected from the contact patch by means of two opposite first grooves in opposite axial directions of the tread. Thus, traction on wet roads can be improved. While the directional pattern with the preferred rolling direction is advantageous for wet road surfaces, other embodiments are possible.

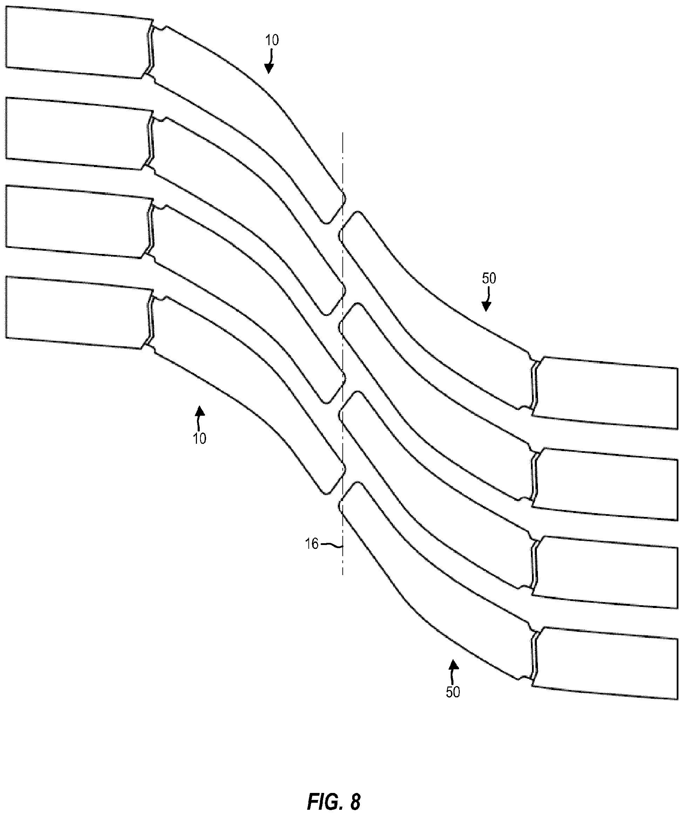

For example, Fig. 8 illustrates an exemplary embodiment of an S-shaped tread pattern according to the present disclosure. For some embodiments, according to Fig. 8, the tread may comprise a second set of consecutive blocks 50 in addition to the first set of consecutive blocks 10. The second set of consecutive blocks 50 may be arranged on an opposite side of the equatorial plane 16 of the tire. In contrast to the above-described embodiment comprising a V-shaped tread pattern, the second set of consecutive blocks 50 may be provided point-symmetric to the first set of blocks 10, leading to an S-shaped tread pattern which does not have preferred rolling direction.

**Tire footprint measurement**

Within the context of this disclosure, a "tire footprint" means all parts of the tire that come into contact with the ground when the tire is in inflated and loaded condition. The tire footprint gives information about the behavior of a tread profile in normal condition, i.e., from the tire footprint it can be seen, which parts of the blocks come into contact with the ground under static loading conditions.

When analyzing a tire footprint, generally, the respective tire is inflated, with the pressure depending on the type of the tire. For a standard radial passenger tire with nominal section widths of 195 mm and below, a tire pressure of 1.9 bar is used. For a standard radial passenger tire with nominal section widths of 205 mm and above, a tire pressure of 2.0 bar is used. For reinforced radial passenger tires of all sizes, a pressure of 2.3 bar is used. For tires of commercial vans, trucks, etc., the standardized inflation pressure according to the European Tyre and Rim Technical Organisation (ETRTO) is used. All measurements are conducted under room ambient temperature.

The tire is then loaded at the following load conditions: For a radial passenger tire, the tire is loaded with weight corresponding to 88% of the tire load index according to ETRTO charts. Tires for commercial vans, trucks, etc. are loaded with weight corresponding to the ETRTO single load rated standard. To conduct the measurement, ink may be applied to the tread profile and the tire may then be pushed against a card according to the above specifications, leaving an ink footprint which can then be analyzed. A footprint is evaluated on three tire portions which are equally spaced by 120° over the circumference of the tire. The metrics that are analyzed in the footprint are then averaged over the three measured portions.

**Tire void volume and rubber volume measurement**

The tire void volume in the context of this application is also measured in footprint condition. I.e., the tire is inflated in the same way as described above with respect to the tire footprint measurement. The void volume is measured by a laser measurement system which is capable of detecting, for each pixel, its relative depth with respect to the tread surface. By this, a total void volume in the contact patch can be calculated by integrating over all measured pixels. The total tread volume can be calculated as the product of the footprint width (FW) and the circumference (C) of the tire, multiplied with the weighed mean depths of the first grooves. The total rubber volume is then the difference between the total tread volume and the total void volume.

Measurement values given in the present disclosure refer to measurements conducted in footprint condition and on new tires, which have not been exposed to wear before the measurement.

**List of reference numbers**

| | |
|---|---|
| 10, 50 | block |
| 12 | first groove |
| 14 | sipe |
| 16 | equatorial plane |
| 20 | leading edge |
| 22, 32 | first portion |
| 24, 34 | second portion |
| 25 | first chamfer |
| 26, 36 | third portion |
| 30 | trailing edge |
| 35 | second chamfer |
| 100 | tire |
| 110 | tread |
| 120 | circumferential direction |
| 130 | axial direction |
| 140 | radial direction |
| 150 | center |
| 212 | first average width |
| 214 | second average width |
| 216 | third average width |

| 222, 224, 322, 324 | recess |
| 250 | second groove |
| 312 | fourth average width |
| 314 | fifth average width |
| 316 | sixth average width |

**Claims**

1. A tire (100) for a vehicle comprising a tread, the tread (110) comprising:

   a set of consecutive blocks (10) arranged along a circumference of the tire; and
   a plurality of first grooves (12) arranged over the circumference of the tire, wherein each of the plurality of first grooves is arranged between two blocks of the set of consecutive blocks;
   each of the set of consecutive blocks comprising:

   a leading edge (20) and a trailing edge (30);
   wherein each leading and trailing edge comprises a first portion (22) arranged at a shoulder region of the tire, a second portion (24) arranged at a position axial inward to the first portion, and a third portion (26) arranged at a position axial inward to the second portion;
   a first chamfer (25) arranged at the leading edge (20),

   wherein the first chamfer has a first average width (212) in the first portion, a second average width (214) in the second portion and a third average width (216) in the third portion;
   wherein the respective average width $\overline{w}$ in the respective portion is calculated as follows:

$$\overline{w} = \frac{1}{L} \cdot \int_0^L w(x)\,dx,$$

   with L being the total length of the respective edge portion, dx being the length of an infinitesimal length element of the respective edge portion and w(x) being the chamfer width at the position x of the respective edge portion, wherein the chamfer width is measured perpendicularly to the respective block edge;
   the tire being **characterised in that** the first average width projected onto a circumferential direction of the tire corresponds to a first projected average width, the second average width projected onto the circumferential direction of the tire corresponds to a second projected average width, and the third average width projected onto the circumferential direction of the tire corresponds to a third projected average width;
   wherein at least two of the first projected average width, the second projected average width and the third projected average width are substantially equal.

2. The tire of claim 1, wherein the first projected average width, the second projected average width and the third projected average width are substantially equal.

3. The tire of any of the preceding claims, wherein at least one of the first projected average width, the second projected average width and the third projected average width is at least 1 mm and at most 3.5 mm.

4. The tire of any one of the preceding claims, wherein the third average width (216) of the first chamfer in the third portion is higher than the second average (214) width of the first chamfer in the second portion.

5. The tire of any one of the preceding claims, wherein the second average width of the first chamfer in the second portion is higher than the first average width of the first chamfer in the first portion.

6. The tire of any one of claims 1 to 5, further comprising a second chamfer (35) arranged on the trailing edge (30) of the block.

7. The tire of claim 6, wherein the second chamfer (35) has a fourth average width (312) in the first portion (32) of the

12

trailing edge (30), a fifth average width (314) in the second portion (34) of the trailing edge and a sixth average width (316) in the third portion (36) of the trailing edge;

the fourth average width projected onto the circumferential direction of the tire corresponds to a fourth projected average width, the fifth average width projected onto the circumferential direction of the tire corresponds to a fifth projected average width, and the sixth average width projected onto the circumferential direction of the tire corresponds to a sixth projected average width;
wherein at least two of the fourth projected average width, the fifth projected average width and the sixth projected average width are substantially equal.

8. The tire of claim 7, wherein the fourth projected average width, the fifth projected average width and the sixth projected average width are substantially equal.

9. The tire of any one of the preceding claims, wherein the tire when in contact with the road in normal condition defines a footprint area comprising:

a footprint width measured in axial direction at the widest axial extension of the footprint, and
a central area making up 80% of the footprint width, the central area having two exterior edges arranged on axial opposite ends of the central area;
two exterior lengths, measured in circumferential direction at the exterior edges of the central area;
an average footprint length, corresponding to the average of the two exterior lengths; and
a tire footprint ratio defined as a ratio between the average footprint length and the footprint width, the tire footprint ratio being at least 0.6 and at most 1.0.

10. The tire of any one of the preceding claims, wherein

the third portion of the leading edge or the trailing edge has an axial extension of at least 25% and at most 40% of a half footprint width of the tire,
the second portion of the leading or trailing edge has an axial extension of at least 25% and at most 55% of a half footprint width of the tire, and
the first portion of the leading or trailing edge has an axial extension of at least 20% and at most 35% of a half footprint width of the tire.

11. The tire of any one of the preceding claims, wherein a separation between two portions of the leading and trailing edge is defined by either one of:

a recess in the respective edge between neighboring portions;
an inclination angle of the respective edge to the circumferential direction of the tire variation;
the direction or magnitude of curvature of the respective edge;
a stepwise increase or decrease in chamfer width;
a groove extending through the block in substantial circumferential direction; or
a combination thereof.

12. The tire of any one of the preceding claims, further comprising a second groove extending through each of the set of consecutive blocks, connecting two consecutive first grooves.

13. The tire of any one of the preceding claims, the tread further comprising:

a plurality of sipes defining an edge ingredient, EI, corresponding to the ratio between a sum of projected lengths of the plurality of sipes in an axial direction, SAP, and the circumference of the tread, C, such that

$$EI = \frac{\sum SAP}{C},$$

wherein the EI is at least 2 and at most 20.

14. The tire of any one of the preceding claims, wherein the ratio between void volume and rubber volume is at least 0.20 and at most 0.40, and preferably at least 0.28 and at most 0.35.

**Patentansprüche**

1.  Reifen (100) für ein Fahrzeug, der eine Lauffläche umfasst, wobei die Lauffläche (110) umfasst:

    einen Satz aufeinanderfolgender Blöcke (10), die entlang eines Umfangs des Reifens angeordnet sind; und eine Vielzahl von ersten Rillen (12), die über den Umfang des Reifens hinweg angeordnet sind, wobei jede der Vielzahl von ersten Rillen zwischen zwei Blöcken des Satzes aufeinanderfolgender Blöcke angeordnet ist; wobei jeder des Satzes aufeinanderfolgender Blöcke umfasst:

    eine Vorderkante (20) und eine Hinterkante (30);
    wobei jede Vorderkante und Hinterkante einen ersten Abschnitt (22), der an einem Schulterbereich des Reifens angeordnet ist, einen zweiten Abschnitt (24), der an einer Position axial einwärts zu dem ersten Abschnitt angeordnet ist, und einen dritten Abschnitt (26) umfasst, der an einer Position axial einwärts zu dem zweiten Abschnitt angeordnet ist;
    eine erste Fase (25), die an der Vorderkante (20) angeordnet ist,
    wobei die erste Fase eine erste durchschnittliche Breite (212) in dem ersten Abschnitt, eine zweite durchschnittliche Breite (214) in dem zweiten Abschnitt und eine dritte durchschnittliche Breite (216) in dem dritten Abschnitt aufweist;
    wobei die jeweilige durchschnittliche Breite w in dem jeweiligen Abschnitt wie folgt berechnet wird:

    $$\overline{w} = \frac{1}{L} \cdot \int_0^L w(x)dx,$$

    wobei L die Gesamtlänge des jeweiligen Kantenabschnitts ist, dx die Länge eines infinitesimalen Längenelementes des jeweiligen Kantenabschnitts ist und w(x) die Fasenbreite an der Position x des jeweiligen Kantenabschnitts ist, wobei die Fasenbreite senkrecht zur jeweiligen Blockkante gemessen wird;
    der Reifen **dadurch gekennzeichnet ist, dass** die erste durchschnittliche Breite projiziert auf eine Umfangsrichtung des Reifens einer ersten projizierten durchschnittlichen Breite entspricht, die zweite durchschnittliche Breite projiziert auf die Umfangsrichtung des Reifens einer zweiten projizierten durchschnittlichen Breite entspricht und die dritte durchschnittliche Breite projiziert auf die Umfangsrichtung des Reifens einer dritten projizierten durchschnittlichen Breite entspricht;
    wobei mindestens zwei der ersten projizierten durchschnittlichen Breite, der zweiten projizierten durchschnittlichen Breite und der dritten projizierten durchschnittlichen Breite im Wesentlichen gleich sind.

2.  Reifen nach Anspruch 1, wobei die erste projizierte durchschnittliche Breite, die zweite projizierte durchschnittliche Breite und die dritte projizierte durchschnittliche Breite im Wesentlichen gleich sind.

3.  Reifen nach einem der vorstehenden Ansprüche, wobei mindestens eine der ersten projizierten durchschnittlichen Breite, der zweiten projizierten durchschnittlichen Breite und der dritten projizierten durchschnittlichen Breite mindestens 1 mm und höchstens 3,5 mm beträgt.

4.  Reifen nach einem der vorstehenden Ansprüche, wobei die dritte durchschnittliche Breite (216) der ersten Fase in dem dritten Abschnitt größer ist als die zweite durchschnittliche Breite (214) der ersten Fase in dem zweiten Abschnitt.

5.  Reifen nach einem der vorstehenden Ansprüche, wobei die zweite durchschnittliche Breite der ersten Fase in dem zweiten Abschnitt größer ist als die erste durchschnittliche Breite der ersten Fase in dem ersten Abschnitt.

6.  Reifen nach einem der Ansprüche 1 bis 5, ferner umfassend eine zweite Fase (35), die an der Hinterkante (30) des Blocks angeordnet ist.

7.  Reifen nach Anspruch 6, wobei die zweite Fase (35) eine vierte durchschnittliche Breite (312) in dem ersten Abschnitt (32) der Hinterkante (30), eine fünfte durchschnittliche Breite (314) in dem zweiten Abschnitt (34) der Hinterkante und eine sechste durchschnittliche Breite (316) in dem dritten Abschnitt (36) der Hinterkante aufweist;

die vierte durchschnittliche Breite projiziert auf die Umfangsrichtung des Reifens einer vierten projizierten durchschnittlichen Breite entspricht, die fünfte durchschnittliche Breite projiziert auf die Umfangsrichtung des Reifens einer fünften projizierten durchschnittlichen Breite entspricht und die sechste durchschnittliche Breite projiziert auf die Umfangsrichtung des Reifens einer sechsten projizierten durchschnittlichen Breite entspricht; wobei mindestens zwei der vierten projizierten durchschnittlichen Breite, der fünften projizierten durchschnittlichen Breite und der sechsten projizierten durchschnittlichen Breite im Wesentlichen gleich sind.

8. Reifen nach Anspruch 7, wobei die vierte projizierte durchschnittliche Breite, die fünfte projizierte durchschnittliche Breite und die sechste projizierte durchschnittliche Breite im Wesentlichen gleich sind.

9. Reifen nach einem der vorstehenden Ansprüche, wobei der Reifen, wenn er unter normalen Bedingungen in Kontakt mit der Straße steht, einen Aufstandsflächenbereich definiert, der umfasst:

eine Aufstandsflächenbreite, die in axialer Richtung an der breitesten axialen Erstreckung der Aufstandsfläche gemessen wird, und
einen zentralen Bereich, der 80 % der Aufstandsflächenbreite ausmacht, wobei der zentrale Bereich zwei Außenkanten aufweist, die an axial gegenüberliegenden Enden des zentralen Bereichs angeordnet sind;
zwei Außenlängen, die in Umfangsrichtung an den Außenkanten des zentralen Bereichs gemessen werden;
eine durchschnittliche Aufstandsflächenlänge, die dem Durchschnitt der beiden äußeren Längen entspricht; und
ein Reifenaufstandsflächenverhältnis, das als Verhältnis zwischen der durchschnittlichen Aufstandsflächenlänge und der Aufstandsflächenbreite definiert ist, wobei das Reifenaufstandsflächenverhältnis mindestens 0,6 und höchstens 1,0 beträgt.

10. Reifen nach einem der vorstehenden Ansprüche, wobei

der dritte Abschnitt der Vorderkante oder der Hinterkante eine axiale Erstreckung von mindestens 25 % und höchstens 40 % einer halben Aufstandsflächenbreite des Reifens aufweist,
der zweite Abschnitt der Vorder- oder der Hinterkante eine axiale Erstreckung von mindestens 25 % und höchstens 55 % einer halben Aufstandsflächenbreite des Reifens aufweist, und
der erste Abschnitt der Vorder- oder der Hinterkante eine axiale Erstreckung von mindestens 20 % und höchstens 35 % einer halben Aufstandsflächenbreite des Reifens aufweist.

11. Reifen nach einem der vorstehenden Ansprüche, wobei eine Trennung zwischen zwei Abschnitten der Vorder- und der Hinterkante durch eines definiert ist, aus:

einer Aussparung in der jeweiligen Kante zwischen benachbarten Abschnitten;
einem Neigungswinkel der jeweiligen Kante zur Umfangsrichtung der Reifenvariation;
der Richtung oder Größe der Krümmung der jeweiligen Kante;
einer stufenweise erfolgenden Zunahme oder Abnahme der Fasenbreite;
einer Rille, die sich durch den Block in im Wesentlichen Umfangsrichtung erstreckt; oder
einer Kombination davon.

12. Reifen nach einem der vorstehenden Ansprüche, ferner umfassend eine zweite Rille, die sich durch jeden des Satzes aufeinanderfolgender Blöcke erstreckt, die zwei aufeinanderfolgende erste Rillen verbinden.

13. Reifen nach einem der vorstehenden Ansprüche, wobei die Lauffläche ferner umfasst:

eine Vielzahl von Lamellen, die einen Kantenbestandteil, EI, definieren, der dem Verhältnis zwischen einer Summe von projizierten Längen der Vielzahl von Lamellen in einer axialen Richtung, SAP, und dem Umfang der Lauffläche, C, derart entspricht, dass

$$EI = \frac{\sum SAP}{C},$$

wobei der EI mindestens 2 und höchstens 20 beträgt.

14. Reifen nach einem der vorstehenden Ansprüche, wobei das Verhältnis zwischen Hohlraumvolumen und Gummivolumen mindestens 0,20 und höchstens 0,40 beträgt und vorzugsweise mindestens 0,28 und höchstens 0,35 beträgt.

## Revendications

1. Pneu (100) pour un véhicule comprenant une bande de roulement, la bande de roulement (110) comprenant :

   un ensemble de blocs consécutifs (10) agencés le long d'une circonférence du pneu ; et
   une pluralité de premières rainures (12) agencées sur la circonférence du pneu, dans lequel chacune de la pluralité de premières rainures est agencée entre deux blocs de l'ensemble de blocs consécutifs ;
   chacun de l'ensemble de blocs consécutifs comprenant :

   un bord d'attaque (20) et un bord de fuite (30) ;
   dans lequel chaque bord d'attaque et de fuite comprend une première partie (22) agencée au niveau d'une région d'épaulement du pneu, une deuxième partie (24) agencée au niveau d'une position axiale vers l'intérieur par rapport à la première partie, et une troisième partie (26) agencée au niveau d'une position axiale vers l'intérieur par rapport à la deuxième partie ;
   un premier chanfrein (25) agencé au niveau du bord d'attaque (20),
   dans lequel le premier chanfrein a une première largeur moyenne (212) dans la première partie, une deuxième largeur moyenne (214) dans la deuxième partie et une troisième largeur moyenne (216) dans la troisième partie ;
   dans lequel la largeur moyenne w respective dans la partie respective est calculée comme suit :

$$\overline{w} = \frac{1}{L} \cdot \int_{0}^{L} w(x)dx,$$

   L étant la longueur totale de la partie de bord respective, dx étant la longueur d'un élément de longueur infinitésimale de la partie de bord respective et w(x) étant la largeur de chanfrein au niveau de la position x de la partie de bord respective, dans lequel la largeur de chanfrein est mesurée perpendiculairement au bord de bloc respectif ;
   le pneu étant **caractérisé en ce que** la première largeur moyenne projetée sur une direction circonférentielle du pneu correspond à une première largeur moyenne projetée, la deuxième largeur moyenne projetée sur la direction circonférentielle du pneu correspond à une deuxième largeur moyenne projetée, et la troisième largeur moyenne projetée sur la direction circonférentielle du pneu correspond à une troisième largeur moyenne projetée ;
   dans lequel au moins deux parmi la première largeur moyenne projetée, la deuxième largeur moyenne projetée et la troisième largeur moyenne projetée sont sensiblement égales.

2. Pneu selon la revendication 1, dans lequel la première largeur moyenne projetée, la deuxième largeur moyenne projetée et la troisième largeur moyenne projetée sont sensiblement égales.

3. Pneu selon l'une quelconque des revendications précédentes, dans lequel au moins l'une parmi la première largeur moyenne projetée, la deuxième largeur moyenne projetée et la troisième largeur moyenne projetée est d'au moins 1 mm et d'au plus 3,5 mm.

4. Pneu selon l'une quelconque des revendications précédentes, dans lequel la troisième largeur moyenne (216) du premier chanfrein dans la troisième partie est supérieure à la deuxième largeur moyenne (214) du premier chanfrein dans la deuxième partie.

5. Pneu selon l'une quelconque des revendications précédentes, dans lequel la deuxième largeur moyenne du premier chanfrein dans la deuxième partie est supérieure à la première largeur moyenne du premier chanfrein dans la première partie.

6. Pneu selon l'une quelconque des revendications 1 à 5, comprenant en outre un second chanfrein (35) agencé sur le bord de fuite (30) du bloc.

7. Pneu selon la revendication 6, dans lequel le second chanfrein (35) a une quatrième largeur moyenne (312) dans la première partie (32) du bord de fuite (30), une cinquième largeur moyenne (314) dans la deuxième partie (34) du bord de fuite et une sixième largeur moyenne (316) dans la troisième partie (36) du bord de fuite ;

la quatrième largeur moyenne projetée sur la direction circonférentielle du pneu correspond à une quatrième largeur moyenne projetée, la cinquième largeur moyenne projetée sur la direction circonférentielle du pneu correspond à une cinquième largeur moyenne projetée, et la sixième largeur moyenne projetée sur la direction circonférentielle du pneu correspond à une sixième largeur moyenne projetée ;
dans lequel au moins deux parmi la quatrième largeur moyenne projetée, la cinquième largeur moyenne projetée et la sixième largeur moyenne projetée sont sensiblement égales.

8. Pneu selon la revendication 7, dans lequel la quatrième largeur moyenne projetée, la cinquième largeur moyenne projetée et la sixième largeur moyenne projetée sont sensiblement égales.

9. Pneu selon l'une quelconque des revendications précédentes, dans lequel le pneu lorsqu'il est en contact avec la route dans des conditions normales définit une zone d'empreinte comprenant :

une largeur d'empreinte mesurée dans une direction axiale au niveau de l'extension axiale la plus large de l'empreinte, et
une zone centrale représentant 80 % de la largeur d'empreinte, la zone centrale ayant deux bords extérieurs agencés sur des extrémités opposées axiales de la zone centrale ;
deux longueurs extérieures, mesurées dans une direction circonférentielle au niveau des bords extérieurs de la zone centrale ;
une longueur d'empreinte moyenne, correspondant à la moyenne des deux longueurs extérieures ; et
un rapport d'empreinte de pneu défini comme un rapport entre la longueur d'empreinte moyenne et la largeur d'empreinte, le rapport d'empreinte de pneu étant d'au moins 0,6 et d'au plus 1,0.

10. Système selon l'une quelconque des revendications précédentes, dans lequel

la troisième partie du bord d'attaque ou du bord de fuite a une extension axiale d'au moins 25 % et d'au plus 40 % d'une demi-largeur d'empreinte du pneu,
la deuxième partie du bord d'attaque ou de fuite a une extension axiale d'au moins 25 % et d'au plus 55 % d'une demi-largeur d'empreinte du pneu, et
la première partie du bord d'attaque ou de fuite a une extension axiale d'au moins 20 % et d'au plus 35 % d'une demi-largeur d'empreinte du pneu.

11. Pneu selon l'une quelconque des revendications précédentes, dans lequel une séparation entre deux parties du bord d'attaque et de fuite est définie par l'un ou l'autre parmi :

un évidement dans le bord respectif entre des parties voisines ;
un angle d'inclinaison du bord respectif par rapport à la direction circonférentielle de la variation de pneu ;
la direction ou l'amplitude de courbure du bord respectif ;
une augmentation ou une diminution par étapes de la largeur de chanfrein ;
une rainure s'étendant à travers le bloc dans une direction circonférentielle substantielle ; ou
une combinaison de ceux-ci.

12. Pneu selon l'une quelconque des revendications précédentes, comprenant en outre une seconde rainure s'étendant à travers chacun de l'ensemble de blocs consécutifs, reliant deux premières rainures consécutives.

13. Pneu selon l'une quelconque des revendications précédentes, la bande de roulement comprenant en outre :

une pluralité de lamelles définissant un ingrédient de bord, EI, correspondant au rapport entre une somme de longueurs projetées de la pluralité de lamelles dans une direction axiale, SAP, et la circonférence de la bande de roulement, C, de telle sorte que

$$EI = \frac{\sum SAP}{C},$$

dans lequel l'EI est d'au moins 2 et d'au plus 20.

14. Pneu selon l'une quelconque des revendications précédentes, dans lequel le rapport entre le volume de vide et le volume de caoutchouc est d'au moins 0,20 et d'au plus 0,40, et de préférence d'au moins 0,28 et d'au plus 0,35.

**FIG. 1**

**FIG. 2**

FIG. 3

FIG. 4A

FIG. 4B

FIG. 4C

FIG. 5

FIG. 6

**FIG. 7**

*FIG. 8*

**EP 4 438 342 B1**

**REFERENCES CITED IN THE DESCRIPTION**

**Patent documents cited in the description**

- FR 3043592
- JP 2020179828 A
- US 2020001654 A1
- US 2020189323 A
- FR 3108562 A1